# EUROPÄISCHE PATENTANMELDUNG

(11) **EP 0 687 869 A2**
(43) Veröffentlichungstag der Anmeldung: **20.12.1995**
(21) Anmeldenummer: 95108897.0
(22) Anmeldetag: 09.06.1995
(51) Int. Cl.: F24F 3/16

(54) **Verfahren und Vorrichtung zum Entwesen von Luft**

(30) Priorität: 13.06.1994 CH 1864/94
(71) Anmelder: CEPTER LTD., Switzerland, CH-8005 Zürich (CH)
(72) Erfinder: Stolz, Kurt E., CH-8820 Wädenswil (CH); Schulthess, Herrmann, CH-6648 Minusio (CH); Stark, Walter, CH-6983 Magliaso (CH)
(74) Vertreter: OK pat AG

(57) **Zusammenfassung**

Zur Entwesung der Luft, d.h. zur Unschädlichmachung von in der Luft und in einem Kanalsystem vorhandenen Wesen wie Kleinstinsekten und deren Eiern, Bakterien, Viren sowie Pilzen und deren Sporen wird die Luft, gegebenenfalls nach ihrer Befeuchtung in einer Befeuchtungseinrichtung (**10**), mittels einer Ionisationseinrichtung (**17**, **18**) ionisiert und dadurch entwest. Ausserdem wird der ionisierten Luft zeitweilig ein mittels einer Feinverteilungseinrichtung (**18**) ein Desinfektionsmittel zugegeben, welches sich filmartig an den Ionen der ionisierten Luft absetzt und dadurch nicht nur die Luft sondern auch die Innenwandung des Kanalsystems (**14**) entwest, so dass eine erneute Verseuchung der Luft verhindert wird. Die bevorzugt automatisch gesteuerte Vorrichtung kann in neue und bestehende Lüftungs- oder Klimaanlagen eingebaut werden.

## Beschreibung

Die Erfindung betrifft ein Verfahren zum Entwesen von Luft nach dem Oberbegriff des Patentanspruchs 1 und eine Vorrichtung zum Entwesen von Luft nach dem Oberbegrif des Patentanspruchs 4.

Zur zwangsweisen Erneuerung von Luft in geschlossenen Räumen, insbesondere in Spitälern, Banken, Bürogebäuden, Gastronomieeinrichtungen, Laboratorien, Zivilschutzanlagen sowie in einer Vielzahl von industriellen Betrieben werden Anlagen eingesetzt, mittels welchem die Luft permanent oder periodisch erneuert wird. Unter geschlossenen Räumen werden dabei solche Räume verstanden, die entweder im Inneren von Gebäuden liegen und somit keine Fenster aufweisen, oder die Fenster aufweisen, welche aber nur der Belichtung durch Tageslicht und nicht dem Luftaustausch dienen. Der Einsatz solcher Anlagen bei innenliegenden Räumen entspricht einer Notwendigkeit, und auch bei aussenliegenden Räumen kann er sich aus verschiedenen Gründen als wünschbar oder nötig erweisen. Man schafft damit ein angenehmes Raumklima und vermeidet einen unerwünschten Luftaustausch zwischen einem Raum und der Umgebung, was dazu dienen kann, die Umgebung vor dem Austritt verschmutzter und verseuchter Luft aus einem Raum -beispielsweise aus einem chemischen Labor oder einer chemischen Produktionsstätte- zu schützen oder den Eintritt verschmutzter und verseuchter Luft aus einer stark belasteten Umgebung in einen Raum zu verhindern. In gewissen Fällen, beispielsweise im Bereich von chemischen und medizinischen Einrichtungen, kann es auch erwünscht sein, sowohl den Entritt wie auch den Austritt verschmutzter und verseuchter Luft in bzw. aus einem Raum zu verhindern. Um einen Austritt solcher Luft durch undichte Stellen wie Luftschleusen und Fugen zu verhindern, wird die Luft durch Saugzug bzw. unter Unterdruck gefördert, während man zur Verhinderung des Eintritts solcher Luft an den genannten undichten Stellen die Luft unter Überdruck durch die Räume fördert.

Im folgenden wird hauptsächlich auf die Probleme eingegangen, die bei der Zufuhr von Luft aus der Umgebung über ein Kanalsystem zu Räumen auftreten; es ist aber leicht einzusehen, dass beim Abführen von Luft über ein Kanalsystem aus Räumen in die Umgebung im wesentlichen die gleichen Probleme auftreten, die sich ebenfalls mit den später erläuterten Massnahmen bewältigen lassen.

Als Lüftungsanlage sollen im folgenden Einrichtungen bezeichnet werden, mittels welchen Luft zu Be- oder Entlüftungszwecken mit Umgebungstemperatur und Umgebungsfeuchtigkeit durch ein Kanalsystem zu oder von Räumen gefördert wird, wobei auch Filter zur Entfernung grober Verunreinigungen vorgesehen sein können, während man zur Raumheizung eine beliebige Heizungseinrichtung verwendet. Der Nachteil von Belüftungsanlagen dieser Art - der für Entlüftungsanlagen meist nicht ins Gewicht fällt - besteht im wesentlichen darin, dass sie einen antisaisonalen Effekt haben, indem im Winter kalte, im Sommer aber warme Luft in die Räume gefördert wird. Im Winter wird die kalte Luft in den Räumen erwärmt, wodurch die relative Luftfeuchtigkeit unter ein bekömmliches Mass absinkt, so dass die beim Einatmen der zu trockenen Luft bekannten gesundheitlichen Beschwerden auftreten. Der gegenteilige, im Sommer zu erwartende Effekt der Abkühlung von heisser Aussenluft im Gebäudeinneren und der dadurch entstehenden erhöhten relativen Luftfeuchtigkeit wirkt sich im allgemeinen weniger gravierend aus als die unerwünschte Beheizung durch die eintretende Luft hoher Temperatur. Solche einfache Belüftungsanlagen, bei denen im allgemeinen die Luft nicht in einem geschlossenen Kreislauf zirkuliert, werden in neuerer Zeit praktisch nur noch an Orten eingesetzt, an welchen die Raum- bzw. Lufttemperatur und die Luftfeuchtigkeit keine wesentliche Rolle spielen und wo sich Menschen nicht oder nur während kurzer Zeit aufhalten.

Anstelle der oben beschriebenen Belüftungsanlagen werden heute vorwiegend Klimaanlagen eingesetzt, bei welchen die Luft durch ein offenes oder ein geschlossenes System gefördert wird, wobei im letzteren Fall jeweils meist nur ein geringer Anteil der Luft ersetzt wird, insbesondere um Verluste bei undichten Stellen zu kompensieren. Klimaanlagen dienen nicht nur zum Fördern und eventuellen Filtern der Luft sondern auch dazu, die eintretende Luft im Winter zu erwärmen und zu befeuchten und sie im Sommer zu kühlen und zu trocknen. Klimaanlagen können mit konventionellen Heizungen zusammenwirken oder selbst die gesamte Heizfunktion übernehmen.

Obwohl, wie erwähnt, sowohl Lüftungsanlagen wie auch Klimaanlagen über Luftfilter verfügen, welche gröbere Verunreinigungen zurückhalten, gelangen Wesen, worunter im folgenden u.a. Kleinstinsekten und deren Eier, Larven, Bakterien, Viren sowie Pilze und deren Sporen verstanden werden sollen, ungehindert in die zu belüftenden Räume bzw. können diese verlassen. Solche Wesen können die Gesundheit der sich in den Räumen aufhaltenden Menschen ernsthaft beeinträchtigen. In diesem Zusammenhang soll erwähnt werden, dass der Begriff 'Luftreinigung' für das Ausfiltern von gröberen Verschmutzungspartikeln verwendet wird, während unter dem Begriff 'Entwesung' die Unschädlichmachung von Kleinstinsekten und deren Eiern, Bakterien, Viren, Pilzen und deren Sporen, welche sich nur schwer ausfiltern lassen, zu verstehen ist. Als Gegenteil der Entwesung wird der Begriff 'Verseuchung' benutzt (was streng betrachtet nicht ganz korrekt ist, da es auch andere als von Wesen verursachte Verseuchungen wie beispielsweise Strahlungsverseuchungen gibt).

Wenn auch gewisse Verseuchungen durch Lüftungsanlagen verursacht werden können, so gehen doch besonders schädliche Wirkungen von Klimaanlagen aus, d.h. von Anlagen, bei denen die Luft befeuchtet wird. Im allgemeinen wird für die Befeuchtung der Luft nämlich nicht strömendes Wasser aus einem Netz sondern stehendes Wasser aus Vorratsbehältern verwendet; wenn auch das Leitungswsser, mit welchem diese Vorratsbehälter gefüllt werden, eine nur unbedenkliche Menge der genannten Wesen enthält, so vermehren sich diese in den Vorratsbehältern rasch. Die mit solchem Wasser befeuchtete Luft hat in verschiedener Hinsicht ungünstige Wirkungen. Erstens verursacht sie beim Einatmen oder gegebenenfalls beim Kontakt mit der Haut oder mit Schleimhäuten unangenehme Gefühle und/oder gesundheitliche Schädigungen. Zweitens hat sie eine sekundäre Vermehrung der Wesen zur Folge, und zwar aus folgendem Grund: mit der Befeuchtung der Luft beabsichtigt man eine hinreichende relative Luftfeuchtigkeit zu erhalten; dabei lässt sich nicht vermeiden, dass sich an gewissen Orten der Kanalsysteme Feuchtigkeit niederschlägt, insbesondere in kaum durchströmten Bereichen wie Ecken und hinter umströmten Kanten, sowie in verhältnismässig kalten Bereichen, die beispielsweise dort vorhanden sind, wo Teile der Kanalsysteme unisoliert durch Kaltzonen der Umgebung führen. In der auf diese Weise niedergeschlagenen Feuchtigkeit vermehren sich nun die genannten Wesen weiterhin und gelangen auch von dort aus in den Luftstrom und somit in die zu belüftenden Räume. Die Vermehrung der Wesen erfolgt noch schneller, wenn - was vor allem in industriellen Betrieben der Fall ist - Staubpartikel oder kleinste Fasern, insbesondere organischer Art, in die Klimaanlage gelangen und sich z. B. an den Wandungen des Vorratsbehälters oder in schwach durchströmten Bereichen des Kanalsystems niedersetzen, wo sie in feuchtem Zustand eigentliche Nährböden für die Wesen bilden.

Durch Luft aus Lüftungs- und insbesondere aus Klimaanlagen können infolge der oben beschriebenen Vorgänge verschiedenste Krankheiten, z.B. virale, bakterielle und pilzbedingte, übertragen werden. Häufig und gefürchtet sind derartige Ansteckungen in Krankenhäusern, wo die Klimaanlagen - neben anderen Faktoren - für die Verbreitung des sog. infektiösen Hospitalismus verantwortlich sind, der insbesondere darum gefährlich ist, weil er ohnehin geschwächte Personen mit verminderten Abwehrkräften betrifft.

Besonders bekannt geworden ist auch der Fall der sog. 'Legionärskrankheit', bei welcher eine Ansteckung von zahlreichen Teilnehmern einer Tagung von Kriegsveteranen mit einer infektiösen Pneumonie anscheinend über die Klimaanlage eines Kongressgebäudes erfolgte. Die gesundheitlichen Störungen, die durch Belüftungs- und Klimaanlagen und insbesondere durch die in der befeuchteten Luft vorhandenen Wesen verursacht werden, bezeichnet die Medizin auch als 'Sick Building Disease'.

In Arbeitsräumen tritt 'Sick Building Disease' am häufigsten in bestimmten Zeitabständen nach arbeitsfreien Tagen auf, an welchen die Klimaanlage abgeschaltet gewesen war. Daraus kann geschlossen werden, dass sich - wie schon erwähnt - die krankheitsverursachenden Wesen in stehendem Wasser besonders vermehren.

Zur Entwesung der Luft, d.h. zur Vernichtung oder weitestgehenden Dezimierung der erwähnten schädigenden Wesen wurde versucht, der Luft selbst oder dem zur Befeuchtung der Luft dienenden Wasser desinfektierende Stoffe beizufügen. Mit dieser Massnahme erzielte man zwar den beabsichtigten Effekt, aber gleichzeitig traten auch unerwünschte Nebeneffekte ein, indem nun die beigefügten Stoffe selbst irritierend und gesundheitsschädigend wirkten. Diese Nebeneffekte waren so gravierend, dass in einigen Ländern wie beispielsweise in der Schweiz das Zusetzen von desinfektierenden Stoffen zur Luft oder zum Befeuchtungswasser von Klimaanlagen bei Normalbetrieb verboten und nur zu periodischen Reinigungszwecken der Anlagen oder gegebenenfalls bei extrem erhöhter Ansteckungsgefahr zulässig ist.

Um die erwähnten unerwünschten Nebeneffekte bei der permanenten Zugabe von Desinfektionsmittel zu reduzieren, wurde auch so vorgegangen, dass die Zugabe nur zeitweilig erfolgte. Dadurch gelang es zwar, die Kanalsysteme und damit die geförderte Luft während der Desinfektionsmittel-Zugabe hinlänglich zu entwesen, doch erwies es sich als unmöglich, eine Menge, die genügend klein war, um keinerlei Schäden zu bewirken, so fein zu verteilen, dass eine effiziente Entwesung zustande gekommen wäre. Wenn auch die Entwesung während der Desinfektionsmittel - Zugabe genügend war, so trat doch anschliessend schnell wieder eine Verseuchung auf.

Es wurde auch versucht, eine Entwesung der Luft, d.h. eine Elimination der genannten schädlichen Wesen in einer Weise durchzuführen, bei welcher unerwünschte Nebeneffekte nicht zu erwarten sind, nämlich durch Ionisation der Luft. Lüftungs- und Klimaanlagen sind allgemein dauernd oder nur zeitweise in Betrieb. Anlagen in Krankenhäusern beispielsweise arbeiten pausenlos, ebenso wie Klimaanlagen mit Heizfunktion in anderen Gebäuden.

Lüftungsanlagen und Klimaanlagen ohne Heizfunktion werden häufig nur während der Arbeitszeiten in Betrieb genommen, wobei die Ionisation der Luft entweder während der gesamten Betriebszeit der Anlage oder, insbesondere bei Klimaanlagen mit Heizfunktion, nur während der Zeit, in welcher die zu belüftenden Räume benützt werden, erfolgt. Die Ionisation bewirkt, dass alle im Luftstrom vorhandenen Wesen wie Kleinstinsekten und deren Eier, Bakterien, Viren sowie Pilze und deren Sporen abgetötet und somit unschädlich gemacht werden. Nebenwirkungen oder Abfallprodukte entstehen dabei nicht, so dass die Ionisation bei richtiger Anwendung als gesundheitsunschädliche und umweltfreundliche Entwesung der Luft in Belüftungs- und Klimaanlagen gelten kann. Ein für Klimaanlagen geeignetes Verfahren der Ionisation und eine entsprechende Ionisationseinrichtung werden in der **CH-524 112** beschrieben. Es ist von grösster Wichtigkeit, dass nach einer Ionisationsmethode gearbeitet wird, bei welcher Ozon nicht oder nur in kleinsten Mengen produziert wird, da sowohl grosse Mengen an Ozon selbst wie auch die sich aus Ozon und Luftstickstoff bildenden salpeterhaltigen Säuren unbekömmlich sind.

Ein Nachteil der Behandlung der Luft mittels Ionisation besteht darin, dass es zwar gelingt, die Luft nahezu vollständig zu entwesen, dass aber die Vermehrung der Wesen in nassen Bereichen, d.h. z.B.in Kanalbereichen mit niedergeschlagener Feuchtigkeit sowie in Vorratsbehältern - insbesondere wenn sich dort auch Staub abgesetzt hat - nicht verhindert werden kann. Zu diesem Nachteil trägt der Vorratsbehälter im allgemeinen weniger bei als das Kanalsystem. Erstens kann der Vorratsbehälter beim Abschalten der Klimaanlage geleert werden; dies erlaubt es, ihn mindestens periodisch gründlich zu reinigen bzw. zu entwesen und verhindert auch, dass in stehendem Wasser eine Vermehrung der Wesen stattfindet. Zweitens strömt die Luft im allgemeinen nach ihrer Befeuchtung direkt zur Ionisation, wo sie entwest wird, so dass die Verseuchung durch das Befeuchtungswasser wieder rückgängig gemacht wird. Bei reinen Lüftungsanlagen ohne Luftbefeuchtung tritt ohnehin das Problem der Verseuchung durch einen Vorratsbehälter nicht auf, denn Lüftungsanlagen enthalten keine Vorratsbehälter. Anders als die Vorratsbehälter lassen sich die feuchten Bereiche, die sowohl in Kanalsystemen von Klima- wie auch von Belüftungsanlagen vorhanden sein können, nicht ohne weiteres 'entleeren' d.h. trocknen, so dass auch bei abgeschalteten Anlagen - im Gegensatz zu den entleerbaren Behältern - dort stets mit einer Vermehrung der Wesen zu rechnen ist; im weiteren sind Kanalsysteme - anders als Vorratsbehälter - nicht ohne weiteres zugänglich und können daher nicht in einfacher Weise gereinigt bzw. entwest werden; und schliesslich wird die Luft, die durch Ionisation entwest, aber in den Kanalsystemen wieder verseucht worden ist, nicht erneut ionisiert, sondern in wiederverseuchtem Zustand weitergefördert. Es ist also leicht einzusehen, dass zwar der Entwesung der Vorratsbehälter Beachtung geschenkt werden muss, dass aber die Entwesung der Kanalsysteme schwieriger zu erreichen ist.

Die Aufgabe der Erfindung werden somit darin gesehen, ausgehend vom Stand der Technik gemäss dem Oberbegriff des Patentanspruchs **1** bzw. **4**, ein Verfahren und eine Vorrichtung vorzuschlagen, welche gestatten, in einem Kanalsystem einer Lüftungs- oder Klimaanlage Luft von gleichbleibender, einwandfrei entwester Qualität zu erhalten.

Diese Aufgabe wird erfindungsgemäss durch die Merkmale der kennzeichnenden Teile der Patentansprüche **1** bzw. **4** gelöst. Vorteilhafte Weiterbildungen werden durch die abhängigen Patentansprüche **2** und **3** bzw. **5** bis **10** definiert.

Erfindungsgemäss wird also der Luft im Bereich, in dem ihre Ionisation erfolgt, nur zeitweilig ein Desinfektionsmittel zugeführt.

Die Ionisation der Luft ist bekannt und dient wie eingangs beschrieben dazu, die Luft zu entwesen, was meist vor ihrer Zufuhr zu den zu versorgenden Räumen durchgeführt wird, sich aber wie schon erwähnt auch beim Abführen der Luft als nötig erweisen kann; bei Klimaanlagen erfolgt die Ionisation der Luft nach ihrer Befeuchtung, so dass nicht nur die in der Luft sondern auch die aus dem Befeuchtungswasser stammenden in der Luft mitgetragenen schädlichen Wesen wie Kleinstinsekten und deren Eier, Bakterien, Viren sowie Pilze und deren Sporen zerstört werden. Um zu verhindern, dass anschliessend eine Wiederverseuchung der entwesten Luft in wenig durchströmten oder kalten Bereichen des Kanalsystems mit niedergeschlagener Feuchtigkeit stattfindet, in welchen Bereichen sich gesundheitsschädliche Wesen der erwähnten Arten vermehren, setzt man erfindungsgemäss der ionisierten Luft zeitweilig ein Desinfektionsmittel in Feinverteilung zu. Dieses Desinfektionsmittel und die Ionen der ionisierten Luft ziehen sich gegenseitig an, was zur Folge hat, dass sich das Desinfektionsmittel filmartig an der Oberfläche der Ionen anlagert. Man erhält dadurch geladene Teilchen mit einer desinfizierenden Oberfläche, welche sich ihrerseits bevorzugt an nicht elektrisch geladenen Teilen wie an den Innenwandungen des Kanalsystems niederschlagen und dabei dieses entwesen. Auf diese Weise verhindert man eine Neuverseuchung der Luft durch Wesen, welche das Bestreben haben, sich in feuchten oder kaum durchströmten Bereichen des Kanalsystems anzusiedeln und zu vermehren. Weil das Desinfektionsmittel nur zeitweilig zugesetzt wird, zeitigt es keine unerwünschten Nebenwirkungen wie sie bekanntlich bei einer permanenten Zusetzung von Desinfektionsmitteln entstehen.

Der Fortschritt, der mit dem erfindungsgemässen Verfahren bzw. mit der erfindungsgemässen Vorrichtung erzielt wird, beruht somit auf der Kombination zweier Massnahmen, nämlich der permanenten Ionisation der Luft und der zeitweiligen Zugabe eines Desinfektionsmittels in Feinverteilung zur ionisierten Luft; nur infolge der Synergien beider Massnahmen ist vollständige und permanente Entwesung möglich, denn nur durch die Verwendung ionisierter Luft als Träger für das Desinfektionsmittels erreicht man, dass dieses optimal verteilt wird, wobei nur diese optimale Verteilung gestattet, die Menge des verwendeten Desinfektionsmittels so klein zu halten, dass keine unerwünschten Nebeneffekte auftreten.

Die verwendeten Desinfektionsmittel können im Prinzip fest, d.h. pulverförmig, flüssig oder gasförmig sein, müssen aber in jedem Fall feinverteilbar sein. Bevorzugt verwendet man flüssige Desinfektionsmittel, die sich leichter verteilen lassen als feste und die einfacher in der Handhabung sind als gasförmige.

Besonders geeignete Desinfektionsmittel sind in Wasser gelöste Gemische von quaternären Ammoniumsalzen, wie sie z.B. in der **EP-0 377 120** beschrieben werden. Solche Ammniumverbindungen werden in Konzentrationen im Bereich von wenigen Prozenten verwendet und dienen weltweit in grossen Mengen für die Desinfektion von Räumen, Mobiliar, Instrumenten sowie im Lebensmittelbereich; sie können sogar zur Desinfektion an Haut und Schleimhäuten von Menschen und von Isoletten für Frühgeburten verwendet werden und bewirken selbst an Augen keine Irritationen. Sie dienen nicht nur zur Entwesung sondern neutralisieren auch Gerüche verschiedener Art, insbesondere auch solche von Rauchpartikeln.

Das Zusetzen des Desinfektionsmittels zur Luft erfolgt in demjenigen Bereich des Kanalsystems, in welchem auch die Ionisation der Luft stattfindet. Den günstigsten Nutzeffekt erzielt man, wenn die Zugabe des Desinfektionsmittels nach der Ionisierung erfolgt, d.h. wenn - in Strömungsrichtung der Luft gesehen - die Feinverteilung des Desinfektionsmittels nach Ionisationsvorrichtung vorgenommen wird.

Zur Feinverteilung des Desinfektionsmittels dient eine Feinverteilungseinrichtung, welche bei der Verwendung flüssiger Desinfektionsmittel als Sprüheinrichtung ausgebildet ist. Eine solche Sprüheinrichtung kann beispielsweise ein Sprührohr aufweisen, welches in einem Kanal quer zur Strömungsrichtung der Luft verläuft und mindestens eine Düse, meistens aber mehrere in verschiedene Richtungen orientierte Düsen aufweist, durch welche das Desinfektionsmittel versprüht wird; das Sprührohr ist mittels eines Flansches an einer Kanalwandung befestigt und über eine Leitung mit einem Desinfektionstank verbunden. Je nach dem Querschnitt des Kanalsystems, der zeitlichen Menge der geförderten Luft und den Erfordernissen an deren Entwesung können natürlich auch mehrere Sprührohre vorgesehen sein. Zur Förderung des Desinfektionsmittels dient eine Pumpe, welche zusammen mit dem Desinfektionstank in einem Gehäuse angeordnet sein kann.

Die Zusetzung des Desinfektionsmittels findet erfindungsgemäss nicht während der ganzen Dauer der Ionisation sondern nur zeitweilig statt. Die Periode, während welcher die Zusetzung erfolgt, sowie der zeitliche Abstand dieser Perioden sind abhängig von der zeitlichen Menge der geförderten Luft im Kanalsystem sowie von der benötigten Wirkung der Entwesung. Unter üblichen Bedingungen genügt meistens eine Zugabe während etwa 5 Minuten im Abstand von etwa 50 bis 60 Minuten.

Es ist durchaus möglich, die Zugabe nach Bedarf in unregelmässigen zeitlichen Abständen und während verschieden langer Perioden durchzuführen, beispielsweise durch manuelles Ein- und Ausschalten der Feinverteilungseinrichtung aufgrund der Ablesung von die Verseuchung repräsentierenden Messwerten. Im allgemeinen wird zu diesem Zwecke aber eine Steuerungs- oder Regelungsvorrichtung vorgesehen, die zur Betätigung der Feinverteilungsvorrichtung dient. Als konstruktiv einfache Lösung wählt man bevorzugt eine Steuerungseinrichtung, mittels welcher der Zeitabstand zwischen den einzelnen Perioden, während welcher das Desinfektionsmittel zugegeben wird, sowie die Länge dieser Perioden vorgewählt werden kann, oder automatisch nach vorbestimmbaren Parametern aus einer Tabelle abgerufen wird.

Besonders günstig ist es, eine multifunktionale Steuerungsvorrichtung zu wählen, die zusätzliche Funktionen überwacht, meldet und steuert, beispielsweise das Abschalten der Belüftungs- oder Klimaanlage, das Abschalten der Ionisierung oder das Erreichen eines Minimalniveaus im Desinfektionstank.

Um gelegentlich auch den Vorratsbehälter mit dem Befeuchtungswasser zu entwesen, ist es vorteilhaft, eine Leitung vorzusehen, die vom Desinfektionsbehälter zum genannten Vorratsbehälter führt. Die Zufuhr von Desinfektionsmittel zum Vorratsbehälter über diese Leitung kann manuell frei wählbar oder mittels einer Steuerung oder Regelung in bestimmten einstellbaren Zeitabständen erfolgen; am besten wird zu diesem Zweck die schon erwähnte Steuerungseinrichtung mit einer zusätzlichen Komponente versehen.

Zum Zusetzen des Desinfektionsmittel zur Luft in verzweigten Kanalsystemen, beispielsweise in mehrstöckigen Gebäuden, gibt es verschiedene Möglichkeiten. Beispielsweise verwendet man nur eine einzige Einheit, bestehend im wesentlich aus der Ionisierungseinrichtung, der Feinverteilungseinrichtung samt Desinfektionstank und Pumpe und der entsprechenden Steuerungseinrichtung, und führt die Ionisation und die Zugabe des Desinfektionsmittels dort durch, wo das Kanalsystem noch nicht verzweigt ist, im allgemeinen unmittebar nach der Befeuchtung. Eine andere Möglichkeit, die eine insgesamt effizientere Entwesung des Kanalsystems und damit der Luft und einen flexibleren Betrieb gestattet, die aber apparativ aufwendiger ist, besteht darin, für jedes Stockwerk bzw.- jeden Zweigkanal eine solche Einheit zu verwenden. Besonders vorteilhaft ist es, in jedem Stockwerk bzw. in jedem Zweigkanal eine Ionisations- und eine Feinverteilungseinrichtung für das Desinfektionsmittel einzubauen, aber nur einen gemeinsamen Desinfektionstank und nur eine zentrale Steuerungseinrichtung vorzusehen, wobei die letztere so ausgebildet sein kann, dass eine getrennte Steuerung für die verschiedenen Stockwerke bzw. Zweigkanäle möglich ist.

Weitere Einzelheiten des erfindungsgemässen Verfahrens und vorteilhafte Ausgestaltungen der erfindungsgemässen Vorrichtung werden im folgenden anhand eines Beispiels und mit Bezug auf die Zeichnung ausführlich beschrieben. Es zeigt:
- **Fig. 1**: einen Teil einer Klimaanlage mit einer Einrichtung nach der Erfindung, in einem vereinfachten Schaubild;
- **Fig. 2**: einen Zweigkanal einer Lüftungs- oder Klimaanlage, wobei ein Teil der Kanalwandung herausgebraochen ist, mit einem Emitterstab einer Ionisierungseinrichtung und einer Feinverteilungseinrichtung für ein Desinfektionsmittel;
und
- **Fig. 3**: einen Zweigkanal einer Belüftungs- oder Klimaanlage mit einer Feinverteilungseinrichtung für ein Desinfektionsmittel, in einem Querschnitt.

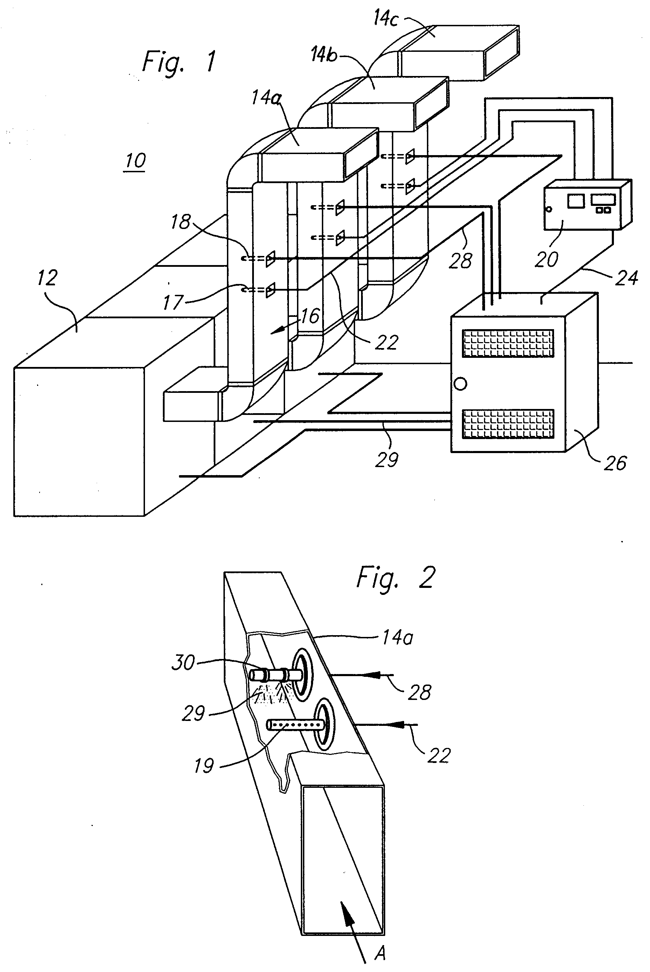

Gemäss **Fig. 1** weist eine Klimaanlage **10** eine Einrichtung **12** auf, in welcher die Luft in üblicher Weise je nach Bedarf erwärmt und befeuchtete oder gekühlt und getrocknet wird. Anschliessend wird die Luft durch ein Kanalsystem **14** gefördert, welches sich in mehrere für verschiedene Stockwerke bestimmte Zweigkanäle **14a**, **14b**, **14c** aufteilt, wobei die Richtung, in welcher die Luft strömt, durchgehend mit Pfeilen **A** bezeichnet ist. Die Vorrichtung zum Entwesen der Luft weist in jedem der Zweigkanäle **14a**, **14b** und **14c** einen Emitterstab **17** einer Ionisationseinrichtung **16** und -in Strömungsrichtung der Luft gesehen der Ionisationseinrichtung **16** nachgeschaltet - eine Feinverteilungseinrichtung **18** für ein flüssiges Desinfektionsmittel auf. Im weiteren zeigt **Fig. 1** eine Steuerungseinrichtung **20**. Von der Steuerungseinrichtung **20** bzw. einem nichtdargestellten Hochspannungsgenerator führen Ionisationsleitungen **22** zu jeder der Ionisationseinrichtungen **16** der verschiedenen Stockwerke, sowie eine Feinverteilungs - Steuerleitung **24** zu einem Desinfektionsbehälter und einer Desinfektionspumpe, die zusammen in einem Gehäuse **26** angeordnet sind. Eine Desinfektionsmittelleitung **28** führt vom Desinfektionsbehälter bzw. von der Desinfektionpumpe zur Feinverteilungseinrichtung **18**. Eine weitere Desinfektionsleitung **29** führt vom Desinfektionsbehälter zu einem nicht näher dargestellten Vorratsbehälter für Befeuchtungswasser, der sich in der Einrichtung **10** befindet.

**Fig. 2** zeigt den Kanal **14a** mit dem Emitterstab **17** der Ionisationseinrichtung **16** und der Ionisationsleitung **22** sowie die Feinverteilungseinrichtung **18** und die Desinfektionsmittelleitung **28** für das flüssige Desinfektionsmittel. Die Feinverteilungseinrichtung **18** ist als Sprüheinrichtung ausgebildet, und das damit versprühte Desinfektionsmittel ist in **Fig. 2** mit **19** bezeichnet.

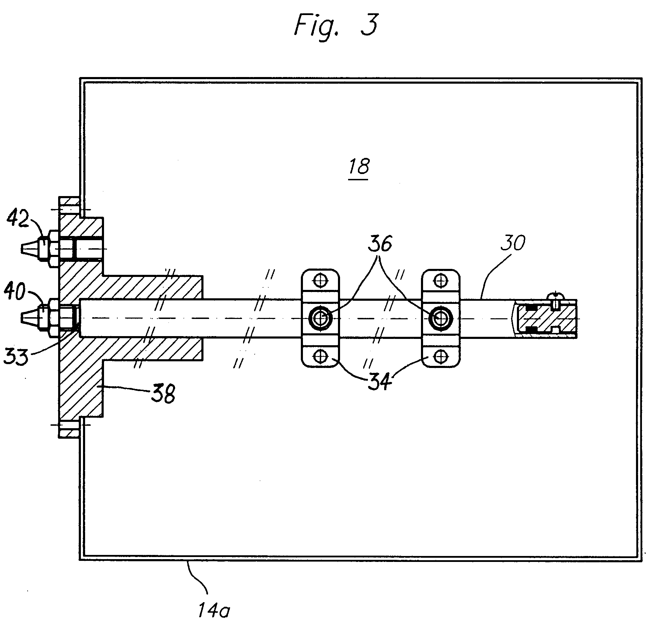

**Fig. 3** stellt die quer in den Zweigkanal **14a** ragende Feinverteilungs- bzw. Sprüheinrichtung **18** genauer dar. Diese Sprüheinrichtung **18** weist ein Sprührohr **30** auf, das quer zur Strömungsrichtung der Luft im Zweigkanal **14a** angeordnet ist. Das Sprührohr **30** ist an seinem inneren Ende durch einen Keilzapfen **32** und eine O-Ring-Dichtung **33** dicht verschlossen. Das Sprührohr ist ferner mit zwei Sprührohrschellen **34** und Sprühdüsen **36** versehen. Zur Befestigung des Sprührohrs **30** in der in **Fig. 3** links gelegenen seitlichen Wandung des Zweigkanals **14a** dient ein Flansch **38** mit einem ersten Anschluss **40** für die in **Fig. 3** nicht dargestellte Desinfektionsmittelleitung **28** und mit einem zweiten Anschluss **42** für einen nicht dargestellten Strömungswächter, dessen Funktion später beschrieben wird.

Die Wirkungsweise der beschriebenen Teile ist die folgende:

Durch das Kanalsystem **14** strömt in Richtung der Pfeile **A** Luft, die zuvor in der Einrichtung **12** erwärmt und befeuchtet bzw. gekühlt und getrocknet worden ist. Mittels des Emitterstabes **17** der Ionisationseinrichtung **16** erfolgt die Ionisationen der Luft. Dies kann während der ganzen Zeit, während welcher die Luft das Kanalsystem **14** durchströmt, oder nur zu bestimmten Zeiten, z.B. während der Arbeitszeiten erfolgen, während ausserhalb der Arbeitszeiten keine Ionisation stattfindet. Durch die Ionisation wird die Luft entwest, d.h. in ihr befindliche gesundheitsschädigende Wesen wie Kleinstinsekten oder deren Eier, Bakterien, Viren sowie Pilze und deren Sporen werden abgetötet und damit unschädlich gemacht. Die Ionisationseinrichtung **16** emittiert bis zu 800 Mio. negative Ionen pro Sekunde. Je nach der Luftgeschwindigkeit im Kanal erhält man so eine Ionenfeld, das einige Meter lang sein kann. Dadurch wird in bekannter Weise die Luft entwest. Beim Weiterströmen gelangt die Luft auch in Bereiche des Kanalsystems **14**, in welchen sich Feuchtigkeit von früher durchgeströmter Luft niedergeschlagen hat, und wo sich kleine vorhandene Mengen der Wesen stark vermehrt haben, so dass eine erneute Verseuchung der Luft stattfinden kann. Um dies zu verhindern, wird zeitweilig das Desinfektionsmittel feinverteilt in der Luft zerstäubt. Als Desinfektionsmittel wird, wie schon erwähnt, beispielsweise ein in der **EP-0 377 120** beschriebenes unter unter dem Markennamen 'DESINFECTIN' bekanntes Desinfektans in flüssiger Form und in geeigneter Konzentration verwendet. Die Feinverteilung desselben geschieht wie folgt: mittels der Steuerungseinrichtung **20** wird vorgewählt, wie lange die Perioden sind, während welcher das Desinfektionsmittel versprüht wird und in welchen zeitlichen Abständen sich diese Perioden folgen. Die Steuereinheit **20** ist so ausgebildet, dass diese Werte für jeden Zweigkanal **14a**, **14b**, **14c** gesondert eingestellt werden können. Durch die Steuereinrichtung **20** wird über die Feinverteilungs - Steuerleitung **24** die Desinfektionspumpe in Gang gesetzt. Diese fördert aus dem im Gehäuse **26** angeordneten Desinfektionstank **26** Desinfektionsmittel über die Desinfektionsleitung **28** zum Anschluss **40** und weiter in das Sprührohr **30**, von wo das Desinfektionsmittel durch die Sprühdüsen **36** in die ionisierte Luft (in der Praxis sprüht man immer gegen den Luftstrom, was zu sehr effizienter Verteilung der Sprühmasse führt!) versprüht wird. Das elektrisch nicht geladene versprühte Desinfektionsmittel und die elektrisch negativ geladenen Ionenn ziehen sich an, so dass sich das feinverteilte Desinfektionsmittel filmartig auf den Ionen absetzt und durch bzw. mit diesen an die Innenwandung des Kanalsystems **14** gelangt und diese dabei entwest. Anschliessend wird durch die Steuerungseinrichtung **20** die Zufuhr von Desinfektionsmittel zum Sprührohr **36** unterbrochen, während die Ionisationseinrichtung **16** weiterhin in Betrieb bleibt. Dieser Vorgang des Zusetzens von Desinfektionsmittel wird in Abständen wiederholt. Ausserdem wird von Zeit zu Zeit und ebenfalls durch die Steuerungseinrichtung **20** gesteuert eine gewisse Menge des Desinfektionsmittels aus dem Desinfektionstank über die weitere Desinfektionsleitung **29** in den Vorratsbehälter der Einrichtung **10** abgegeben, um diesen ebenfalls zu entwesen.

Die mehrfach erwähnte Steuerungseinrichtung **20** ist wie erwähnt multifunktional. Sie dient nicht nur zur Steuerung der bereits beschriebenen Abläufe sondern auch zum Ueberwachen, Steuern und Anzeigen weiterer Funktionen. So wird z.B. die Feinverteilung des Desinfektionsmittels unterbrochen, wenn der Strömungswächter **42** meldet, dass keine Luft den Zweigkanal **14a** durchströmt. Sinkt das Niveau im Desinfektionstank unter einen bestimmten Wert, so erfolgt eine Anzeige. Ebenso wird angezeigt, wenn die Ionisationseinrichtung **16** ausfällt; die Steuerungseinrichtung **20** kann auch so ausgelegt sein, dass in diesem Fall die Feinverteilungseinrichtung **18** ausgeschaltet bzw. nicht eingeschaltet wird.

Die Einrichtung zum Entwesen von Luft in Kanalsystemen von Lüftungs- und Klimaanlagen nach der Erfindung ist nicht nur hocheffizient sondern auch einfach und verhältnismässig kompakt, so dass sie nicht nur in neue Anlagen sondern auch problemlos im Sinne einer Nachrüstung in bestehende Lüftungs- und Klimaanlagen eingebaut werden kann, ohne dass dazu deren Betrieb unterbrochen werden muss.

## Patentansprüche

1. Verfahren zum Entwesen von Luft in einem Kanalsystem einer Lüftungs- oder Klimaanlage, wobei die gegebenenfalls befeuchtete Luft ionisiert wird,
**dadurch gekennzeichnet**,
dass man der ionisierten Luft zeitweilig ein Desinfektionsmittel in Feinverteilung zusetzt.

2. Verfahren nach Patentanspruch **1**,
**dadurch gekennzeichnet**,
dass man ein flüssiges Desinfektionsmittel verwendet und dieses durch Sprühen feinverteilt.

3. Verfahren nach Patentanspruch **1**,
**dadurch gekennzeichnet**,
dass man der Luft das Desinfektionsmittel nach ihrer Ionisation zusetzt.

4. Vorrichtung zum Entwesen von Luft in einem Kanalsystem einer Lüftungs- oder Klimaanlage, mit einer Ionisationseinrichtung zur Ionisation der gegebenenfalls in einer der Ionisierungseinrichtung vorgeschalteten Befeuchtungseinrichtung befeuchteten Luft,
**dadurch gekennzeichnet**,
dass sie eine im Bereich der Ionisationseinrichtung (**16**, **17**) des Kanalsystems (**14**) angeordnete an- und abschaltbare Feinverteilungseinrichtung (**18**) zum zeitweiligen Verteilen eines Desinfektionsmittels (**19**) aufweist.

5. Vorrichtung nach Patentanspruch **4**,
**dadurch gekennzeichnet**,
dass das Desinfektionsmittel (**19**) flüssig ist.

6. Vorrichtung nach Patentanspruch **5**,
**dadurch gekennzeichnet**,
das das Desinfektionsmittel (**19**) ein Gemisch von in Wasser gelösten quaternären Ammoniumsalzen ist.

7. Vorrichtung nach den Patentansprüchen **4** und **5**,
**dadurch gekennzeichnet**,
dass die Feinverteilungseinrichtung (**18**) eine Sprühvorrichtung ist.

8. Vorrichtung nach Patentanspruch **7**,
**dadurch gekennzeichnt**,
dass die Sprühvorrichtung (**18**) ein an einen Desinfektionsbehälter angeschlossenes Sprührohr (**30**) mit mindestens einer Sprühdüse (**36**) aufweist.

9. Vorrichtung nach Patentanspruch **4**,
**dadurch gekennzeichnet**,
dass zum An- und Abschalten der Feinverteilungseinrichtung (**18**) eine Steuerungseinrichtung (**20**) angeordnet ist.

10. Vorrichtung nach Patentanspruch **4**,
**dadurch gekennzeichnet**,
dass die Feinverteilungseinrichtung (**18**) in Strömungsrichtung der Luft gesehen der Ionisationseinrichtung (**16**, **17**) nachgeschaltet ist.
